# EUROPEAN PATENT SPECIFICATION

(11) **EP 0 739 989 B1**
(45) Date of publication and mention of the grant of the patent: **09.08.2000**
(21) Application number: 95937892.8
(22) Date of filing: 20.11.1995
(51) Int. Cl.: C21C 5/56, F27B 3/20

(54) **PROCESS FOR MELTING METAL MATERIALS**
VERFAHREN ZUM SCHMELZEN VON METALLEN
PROCEDE DE FUSION DE METAUX

(30) Priority: 21.11.1994 ES 9400237
(43) Date of publication of application: 30.10.1996
(73) Proprietor: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: MARLES FRANCO, Joan, E-08013 Barcelona (ES); RODRIGUEZ SOLA, Raul, E-08800 Vilanova i la Geltrú (ES)
(86) International application number: ES9500130
(87) International publication number: WO9616189

(56) References cited:
- DE-A- 3 700 769
- DATABASE WPI Section Ch, Week 9316 Derwent Publications Ltd., London, GB; Class A97, AN 93-132627 & SU,A,1 731 824 ( DNEPR METAL INST) , 7 Mayo 1992
- DATABASE WPI Section Ch, Week 7730 Derwent Publications Ltd., London, GB; Class A95, AN 77-53600Y & SU,A,506 628 ( MOSC STEEL ALLOYS) , 2 Febrero 1977

## Description

The present invention relates to a method for melting metals in which a charge is melted in a rotary furnace through the supply of a fuel and the supply of oxygen, through at least one burner, in order to accelerate combustion.

The invention also relates to the use in a rotary furnace for melting metals or nonmetals of a material comprising at least one hydrocarbon-based polymer as an energy-producing material that can release chemically reducing unburned substances.

### BACKGROUND OF THE INVENTION

Melting devices, also known as furnaces, are equipped with an energy-supplying means that is qualitatively determined by the type of furnace.

The electric arc furnace melts the charge by means of the potential difference between the phases of an electrical apparatus and injects energy in the form of a flaming arc into the charge to be melted. Thus, electrical energy is the "characteristic source" of energy for this furnace.

When steels are melted in an electric arc furnace, carbon - generally anthracite - is mixed with the metal charge in varying percentages with respect to the charge and occupies the lower part of the charge. These percentages tend to lie between 1 and 5%. A 100 metric-ton electric furnace, for example, might incorporate with its metal charge between 1 and 5 metric tons of anthracite. If burned at a yield of 100%, this would contribute an additional energy of 8,500 to 40,000 kWh - which represents from 22% to more than 100% of the theoretical energy necessary to melt the charge. At present and due to the rather moderate yield from the carbon at the beginning of the melting cycle, these percentages tend to be held down to around 1.5% since otherwise there would not be enough time during the cycle to burn it all.

The reverberatory and rotary furnaces differ in that the latter turns on its horizontal axis while the former only tilts, but in both cases the means of supplying energy is a burner or torch. The burner or torch operates to burn a fossil fuel using air, oxygen-enriched air, or pure oxygen as comburent and releasing energy onto the charge to be melted. Thus, the characteristic source of energy in this case is chemical in origin.

In search of greater yields for melting furnaces, an "additional energy" supply has been installed in these systems over the last twenty years. This has promoted a savings - at times a very important savings - in the always expensive conventional or "characteristic energy source".

The most important current method for supplying additional energy is so-called "post-combustion", which in broad outline consists of supplementing the charge to be melted with carbon, generally anthracite or black coal, which in the course of the melting period is burned with pure oxygen and consequently releases the additional energy.

The post-combustion methods may be very simple, as in an oxygen lance placed at the mouth of the furnace, or may be quite sophisticated, as in the introduction of several water-cooled lances through the furnace body with regulation of the oxygen flows as a function of the analysis of the flue gas at the furnace exit.

In all cases, one issue limits the optimal post-combustion yield. All the mineral carbon requires a certain temperature to begin the release of the contained volatiles and to ignite with the oxygen, and as a result the "additional energy source" begins to act after a certain time has elapsed from the beginning of melting.

In rotary melting furnaces used for iron melting, anthracite is usually added with the metal charge at percentages which tend to vary between 1.5% and 6% of the charge.

A rotary furnace with a capacity of 20 metric tons, for example, would hold between 400 and 1,200 kg anthracite along with the metal charge, which at a yield of 100% would supply an additional energy of 3,400 to 10,200 kWh, which represents between 50% and 150% of the theoretical energy needed to melt the charge.

At present, and due to the poor yield from the carbon at the beginning of the melting cycle, its percentage is usually held down to around 1.5%, since otherwise there would not be enough time to burn everything to CO₂ and very important quantities of CO (up to 30% of the total volume of flue gas) would be burned off through the stack.

During the first 40% of the total cycle time, flue gas analysis can detect up to 30% oxygen in the flue gas (the anthracite has not ignited and therefore does not combine with the oxygen); during the remaining 60% of the time, the oxygen content in the flue gas is 0%, while in contrast CO reaches values up to 35% (the anthracite has spontaneously ignited and there is insufficient oxygen for its combustion).

The main elements in the charge are iron, carbon, silicon, manganese, and chromium, with the medium being O₂, CO₂, and water. The amount of an element that can be oxidized through combination with the medium is proportional to the temperature of each, to the contact surface between the two, to the chemical reactivity of the element with respect to the medium, to the partial pressure of oxidants in the medium, and above all to the time of contact between the two.

In the heretofore known furnaces equipped with post-combustion systems, the charge - in accordance with the preceding discussion - is subjected during 40% of the cycle to strong partial pressures of free oxygen, and, although initially cold, it progressively heats up with a corresponding increase in its oxidation kinetics. It is during this period that the charge presents its maximum exposure surface to the medium. the weak reactivity of the anthracite does not permit an increase in the rate of melting, thereby prolonging the contact time between the charge and oxidizing medium (40% of the total cycle). The result of all this is the production of an excessive oxidation.

SU-A-506628 discloses the use of a polymeric material as a fuel in a blast furnace, while DE-A-3700769 discloses the use of a polymeric material as a fuel in an electric arc furnace. However, none of them disclose the improvement of the yield of the process.

### DESCRIPTION OF THE INVENTION

The method according to the present invention can resolve the above-described drawbacks and has other advantages as described hereinafter.

The method according to the present invention for melting metals in a rotary furnace comprises melting a charge in a furnace through the supply of a fuel and the supply of oxygen, through at least one burner and is characterized in that it comprises a step of adding a material comprising at least one hydrocarbon-based polymer, said addition being provided immediately before starting the burner, thereby enhancing the thermal yield and/or inhibiting oxidation of the elements constituting the charge to be melted.

The method according to the present invention enhances the thermal yield and inhibits oxidation of the elements constituting the charge to be melted.

As a result of this method step, the added material begins the release of volatiles and their ignition with oxygen from the beginning of the melt, so that the additional energy begins to be released into the charge at this point. The effects thereby produced are a thermal balance of the melting cycle, which is atypical and therefore unexpected, with a savings in energy; a significant increase in the average rate of melting; and a decline in oxidation of the elements constituting the charge to be melted.

The aforementioned material is added immediately before starting the burner.

This mode serves to maximize the yield from the added material.

The added material preferably includes fossil fuels, and it can also include a metal or nonmetal alloy.

In this case, the yield from the alloying elements is substantially increased.

In a preferred embodiment of the invention, the material is added as a compacted solid, with or without binders, or as an uncompacted solid.

In accordance with an advantageous aspect of the invention, the cited hydrocarbon-based polymer comprises unfoamed polystyrene, polyethylene, polypropylene, or a combination thereof.

This added material is ecological since the combustible materials constituting this added material are converted into carbon dioxide and water vapor upon combustion with pure oxygen. The use of such material supports disposal of surplus unfoamed polystyrene, polyethylene, and polypropylene wastes without contaminating the environment and while recovering energy therefrom.

The invention also relates to the use, in a rotary furnace for melting metals, of a material comprising at least one hydrocarbon-based polymer as an energy-producing material that can release chemically reducing uncombusted substances, in order thereby to enhance the thermal yield and/or inhibit oxidation of the elements constituting the charge of metal to be melted, said material being introduced in the furnace prior to starting the burner to melt the metal.

The qualitative effects from this use, which are entirely unexpected, are an increase in the average melting rate, a reduction in the consumption of the "characteristic energy", a reduction in the total energy consumption, and a decline in losses due to oxidation of the elements contained in the charge.

### DESCRIPTION OF PREFERRED EMBODIMENTS AND TEST RESULTS

In the method according to the present invention, a metal charge is melted, in a known manner, while supplying fuel and also supplying oxygen, at least through one burner, in order to accelerate the combustion. The method is characterized in that it also comprises a step for adding a nonconventional energy-producing material which includes at least one hydrocarbon-based polymer, said addition being provided immediately before starting the burner.

This material produces a surprising and unexpected effect since it insures the release of CO and H₂ and its own ignition from the very instant of its introduction into the furnace: given a system for supplying a suitable comburent, this results in a massive release of "additional energy" from the beginning of the cycle.

The method of the invention can be successfully applied in combination with post-combustion systems in a rotary furnace or with systems that supply a suitable comburent.

The addition step is preferably executed after the different mechanical operations which are necessary after charging the material to be melted and the fuel and immediately before starting the furnace burner. This mode of operation maximizes the yield from the material added in this step. When the addition is effected simultaneously with the introduction of the charge or fuel into the furnace, the added material resides for an unnecessary period of time in the furnace giving off fumes, carbon monoxide, hydrogen, etc., and is therefore left depleted.

The added material in this novel supply step is an energy-producing material that carries chemically reducing elements, basically carbon and hydrogen. Above a very low temperature (approximately 80°C), it gives off high-energy chemically reducing elements and ignites with oxygen with a massive release of energy from the beginning of the melting cycle.

The added material can also incorporate into its formulation other components, such as fossil fuels or alloying elements such as carbon, silicon, manganese, magnesium, chromium, nickel, etc.

Depending on the particular formulation, the material will act at this stage of the method as an energy-producing enhancer of the low-temperature thermal yield, that is, as a pure energy producer, or as an energy-producing enhancer of the low-temperature thermal yield and as an inhibitor of oxidation of the elements incorporated in the charge, that is, simultaneously as an energy producer and oxidation inhibitor.

In its role as a pure energy producer at low temperatures, the material added in accordance with the method of the invention behaves according to the following equations.

C₂H₄ +3O₂ =2CO₂+2H₂O+12.8 kWh/kg

C₃H₆ + 9/2O₂ = 3CO₂+3H₂O + 12.8 kWh/kg

C₈H₈ + 10O₂=8CO₂ +4H₂O+11.25 kWh/kg

Upon melting at very low temperatures, it immediately becomes a liquid in intimate contact with the charge, releasing energy to the charge and igniting the carbon in the composition of the material (if its formulation includes carbon) and the carbon supplied for post-combustion, thereby inducing a chain reaction with an exceptionally good thermal yield at the beginning of the cycle.

The quantity of heat released by conduction and convection to a colder body is a function of the temperature gradient existing between the emitter and receiver, the contact surface between the two, the physical characteristics of each, and the contact time. The quantity of heat released by radiation fundamentally depends on the temperature of the emitter and the black body characteristic of the receiver. As can be deduced from the preceding discussion, it is at the beginning of the melting cycle that energy utilization is optimal.

In the step which characterizes the method according to the present invention, the behavior of the material as an inhibitor of oxidation of the elements in the charge composition is fundamentally due to a decline in the partial pressure of the oxidizing agents of the medium, which substantially diminishes the oxidation kinetics of the elements.

The material intimately distributed with the charge releases CO and H₂ in accordance with the following equation.

C_{*x*}H_{*y*} + heat = *x* C + *y* H₂ ; *x* C + *x*/2O₂ = *x* CO

The CO and H₂ react with the oxidizing agents of the medium according to the following equations.

CO + 1/2O₂ = CO₂ ; H₂ + 1/2O₂ = H₂O

CO + H₂O = CO₂ + H₂ ; H₂ + 1/2CO₂ = H₂O + 1/2C

The oxidizing agents are more chemically reactive with the CO and H₂ than with the elements of the charge.

The method of the invention has been tested in a rotary furnace with a capacity of 5.5 metric tons and equipped with an oxypropane torch or burner as the characteristic energy source. This furnace had a pure-oxygen system for post-combustion or comburent supply and was used for iron melting.

Materials with different formulations were used during the tests in order to obtain three types of results.
1) Minimum flow of characteristic energy (propane) while maintaining the conventional melting rate. The typical addition was anthracite and material composed of 30% polyethylene and 70% anthracite compacted into 3-kg bricks with 0.1 kg Portland cement.
2) Ordinary flow of characteristic energy (propane). The typical addition was anthracite and material for the purpose of obtaining an increase in the melting rate. In this case the material added in the step characteristic of the method according to the present invention was 100% polyethylene, presented as uncompacted solid.
3) Ordinary flow of characteristic energy (propane). The typical addition was anthracite and material composed of 25% polypropylene, 25% polystyrene, and 50% ferrosilicon (75% silicon) and 0.1 kg Portland cement used as binder, presented as a compacted solid. The intention of the tests carried out with this composition was to obtain the same melting rate as in test 2 while protecting the added silicon.

The following tables compare the results obtained with configuration 0, which refers to the conventional operation of the furnace without the novel step of material addition.

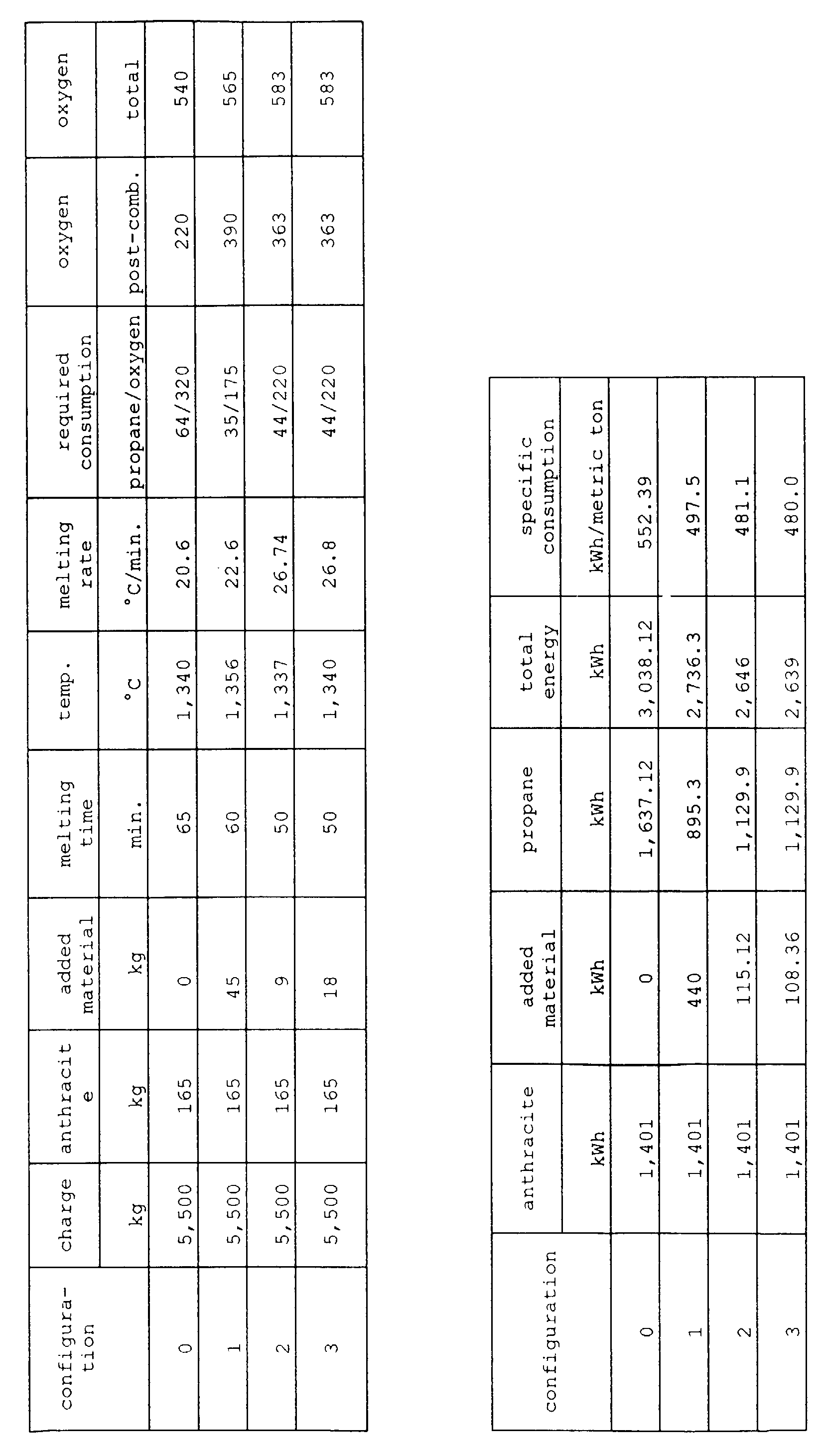

| configuration | carbon | silicon | carbon |
|---|---|---|---|
| | composition % | composition % | equivalent % |
| 0 | 3 | 1.54 | 3.54 |
| 1 | 3.05 | 1.72 | 3.65 |
| 2 | 3.03 | 1.7 | 3.63 |
| 3 | 3.2 | 2.1 | 3.93 |

As can be seen in the first table, the following values varied in the manner indicated for configuration 1 versus the conventional parameters without the invention step (configuration 0):
- a 9.7% increase in the average melting rate
- a 7.7% decline in the melting time
- a 45.3% decline in consumption of conventional fuel (propane)
- a 4.6% increase in total oxygen.

The variations for configurations 2 and 3 versus configuration 0 in the same table are as follows:
- a 29.8% increase in the average melting rate
- a 23% decline in the melting time
- a 31.25% decline in the consumption of conventional fuel (propane)
- a 7.96% increase in total oxygen.

In the second table, configurations 2 and 3 exhibit a decline in specific energy consumption versus configuration 0 (without the invention step) of almost 13%, despite an increase in the melting rate by almost 30% in both configurations. This unexpected fact can only be attributed to the effects of the material addition step according to the present invention.

Analyzing the third table, we can see that in configuration 3, although this test was carried out on a charge identical to those of configurations 0, 1, and 2, the percentage of the elements in the iron has increased 6.6% for the case of carbon and more than 36% for the case of silicon. This fact, which was also unexpected, can only be attributed to the oxidation-inhibiting activity which the material added in the method according to the present invention exerts with respect to the elements contained in the iron.

## Claims

1. Method for melting metals in a rotary furnace comprising the step of melting a charge in a furnace through the supply of a fuel and the supply of oxygen, through at least one burner, characterized in that the said method further comprises a step of adding a material comprising at least one hydrocarbon-based polymer, said addition being provided immediately before starting the burner, thereby enhancing the thermal yield and/or inhibiting oxidation of the elements constituting the charge to be melted.

2. Method according to claim 1, characterized in that the added material also comprises fossil fuel.

3. Method according to claim 1 or 2, characterized in that the added material also comprises metal or nonmetal alloy.

4. Method according to any of the preceding claims, characterized in that the material is added in the form of a compacted solid, with or without binder, or as an uncompacted solid.

5. Method according to claim 1, characterized in that the cited hydrocarbon-based polymer comprises unfoamed polystyrene, polyethylene, or polypropylene, or a combination thereof.

6. Use in a rotary furnace, of a material comprising at least one hydrocarbon-based polymer as an energy-producing material that can release chemically reducing unburned substances, in order thereby to enhance the thermal yield and/or inhibit oxidation of the elements constituting the charge of metal to be melted, said material being introduced in the furnace prior to starting the burner to melt the metal.

## Patentansprüche

1. Verfahren zum Schmelzen von Metallen in einem Drehofen, bei dem man eine Charge in einem Ofen durch Zufuhr eines Brennstoffs und Zufuhr von Sauerstoff durch mindestens einen Brenner aufschmilzt, dadurch gekennzeichnet, daß man bei dem Verfahren ferner ein Material, das mindestens ein Kohlenwasserstoffpolymer enthält, zusetzt, wobei die Zugabe unmittelbar vor Inbetriebnahme des Brenners erfolgt, wodurch die Wärmeausbeute verbessert und/oder die Oxidation der die zu schmelzende Charge bildenden Elemente inhibiert wird.

2. Verfahren nach Anspruch 1, dadurch gekennzeichnet, daß das zugesetzte Material auch fossilen Brennstoff enthält.

3. Verfahren nach Anspruch 1 oder 2, dadurch gekennzeichnet, daß das zugesetzte Material auch Metall- oder Nichtmetall-Legierung enthält.

4. Verfahren nach einem der vorhergehenden Ansprüche, dadurch gekennzeichnet, daß man das Material in Form eines kompaktierten Feststoffs, gegebenenfalls mit Bindemittel, oder als unkompaktierten Feststoff zusetzt.

5. Verfahren nach Anspruch 1, dadurch gekennzeichnet, daß es sich bei dem Kohlenwasserstoffpolymer um ungeschäumtes Polystyrol, Polyethylen oder Polypropylen oder ein Gemisch davon handelt.

6. Verwendung eines Materials, das mindestens ein Kohlenwasserstoffpolymer enthält, als energielieferndes Material, das chemisch reduzierende unverbrannte Substanzen freisetzen kann, in einem Drehofen, zur Verbesserung der Wärmeausbeute und/oder Inhibierung der Oxidation der die zu schmelzende Metallcharge bildenden Elemente, bei der das Material vor Inbetriebnahme des Brenners zum Schmelzen des Metalls in den Ofen eingetragen wird.

## Revendications

1. Procédé de fusion de métaux dans un four rotatif, comprenant l'étape de fusion d'une charge dans un four en introduisant un combustible et en apportant de l'oxygène, par l'intermédiaire d'au moins un brûleur, caractérisé en ce que ledit procédé comprend en outre une étape d'addition d'une matière comprenant au moins un polymère à base hydrocarbonée, ladite addition étant prévue immédiatement avant le démarrage du brûleur, en accroissant ainsi le rendement thermique et/ou en inhibant l'oxydation des éléments constituant la charge destinée à être fondue.

2. Procédé selon la revendication 1, caractérisé en ce que la matière ajoutée comprend également du combustible fossile.

3. Procédé selon la revendication 1 ou 2, caractérisé en ce que la matière ajoutée comprend également un alliage métallique ou non métallique.

4. Procédé selon l'une quelconque des revendications précédentes, caractérisé en ce que la matière est ajoutée sous la forme d'un solide compacté, avec ou sans liant, ou sous la forme d'un solide non compacté.

5. Procédé selon la revendication 1, caractérisé en ce que le polymère à base hydrocarbonée mentionné comprend du polystyrène non moussé, du polyéthylène ou du polypropylène, ou une combinaison de ceux-ci.

6. Utilisation, dans un four rotatif, d'une matière comprenant au moins un polymère à base hydrocarbonée en tant que matière productrice d'énergie, pouvant libérer des substances non brûlées chimiquement réductrices, afin d'ainsi accroître le rendement thermique et/ou d'inhiber l'oxydation des éléments constituant la charge de métal destinée à être fondue, ladite matière étant introduite dans le four avant le démarrage du brûleur en vue de fondre le métal.
